# EUROPÄISCHE PATENTSCHRIFT

(11) **EP 3 122 595 B1**
(45) Veröffentlichungstag und Bekanntmachung des Hinweises auf die Patenterteilung: **05.06.2019**
(21) Anmeldenummer: 15712597.2
(22) Anmeldetag: 24.03.2015
(51) Int. Cl.: B60P 7/13, B60P 3/079, B60P 7/08

(54) **VORRICHTUNG ZUM VERZURREN VON CONTAINERN**
DEVICE FOR LASHING CONTAINERS
DISPOSITIF D'ARRIMAGE DE CONTENEURS

(30) Priorität: 25.03.2014 DE 102014104104
(43) Veröffentlichungstag der Anmeldung: 01.02.2017
(73) Patentinhaber: SEC Ship's Equipment Centre Bremen GmbH & Co. KG, 28217 Bremen (DE)
(72) Erfinder: BEDERKE, Christian, 28259 Bremen (DE); KOSZNIK, Darius, 28327 Bremen (DE); THIELE, Wolfgang, 28259 Bremen (DE)
(74) Vertreter: Kuhnen & Wacker Patent- und Rechtsanwaltsbüro PartG mbB
(86) Internationale Anmeldenummer: PCT/EP2015/056184
(87) Internationale Veröffentlichungsnummer: WO 2015/144659

(56) Entgegenhaltungen:
- WO-A1-2006/046921
- DE-A1- 10 056 341
- DE-U1-202011 050 018
- DE-U1-202011 051 136

## Beschreibung

Die vorliegende Erfindung betrifft Vorrichtung zum Verzurren von Containern, die zwischen zwei Fixierpunkten, die aneinander gesichert werden sollen, zu befestigen ist, mit einem ersten Spannmittel, das mit einem der Fixierpunkte verbindbar ist und eine Spindel enthält, die in Längsrichtung des ersten Spannmittels verläuft und einen Spindel-Gewindeabschnitt aufweist, einem zweiten Spannmittel, das mit dem anderen der Fixierpunkte verbindbar ist, einer Spindelmutter, die einen Spindelmutter-Gewindeabschnitt aufweist, der mit dem Spindel-Gewindeabschnitt des ersten Spannmittels in Eingriff steht, und einem der Spindelmutter zugeordneten Kontermittel, wobei die Spindelmutter zwischen dem ersten und dem zweiten Spannmittel angeordnet ist.

### Stand der Technik

Eine solche Vorrichtung ist aus der DE 203 05 197 U1 bekannt. Weitere Vorrichtungen sind aus DE 100 56 341 A1 oder der EP 1 534 584 B1 bekannt. Dort werden Verzurrvorrichtungen mit einem Spannelement beschrieben, das eine Gewindespindel, eine mit dieser in Eingriff stehende Spindelmutter und ein der Spindelmutter zugeordnetes Kontermittel aufweist, wobei das Kontermittel einen Konterbolzen enthält, der an die Gewindespindel radial festsetzbar ist.

Bei derartigen Vorrichtungen ist es nachteilig, dass das Kontern eine gewisse Zeit in Anspruch nimmt, bis der Konterbolzen in Kraft- und/oder Formschluss mit der Gewindespindel eingedreht ist. Ebenso nimmt es eine entsprechend lange Zeit in Anspruch, bis der Konterbolzen beim Lösen der Verzurrung wieder ausgedreht ist. Ferner kann es passieren, dass das Anziehen des Konterbolzens vergessen wird. In einem solchen Fall wäre die Vorrichtung denn nicht gegen Lösen gesichert.

Unter Vermeidung dieser Probleme wird in der WO 2006/046921 A1 eine Zurrvorrichtung mit einem selbsthemmenden Kontermittel vorgeschlagen. Die Zurrvorrichtung der WO 2006/046921 A1 besteht aus einem Spannmittel, das zwischen zwei Fixierpunkten, die aneinander gesichert werden sollen, zu befestigen ist. Das Spannmittel kann aus Spannmittelteilen bestehen, die jeweils mit einem der Fixierpunkte verbunden werden können. Von den Spannmittelteilen weist mindestens ein erstes Spannmittelteil eine Dehnstange, die in Längsrichtung des Spannmittels verläuft, und einen Gewindeabschnitt auf. Ein zweites Spannmittelteil trägt dabei ein Buchsenteil, das auf das Gewinde des ersten Spannmittelteils aufzuschrauben ist. Zwischen dem ersten und dem zweiten Spannmittelteil ist ein Verbindungsteil angeordnet, das durch Schnappsicherung die gegenseitige Drehung der beiden Spannmittelteile in mindestens einer Drehrichtung ermöglicht, die dem Festziehen des Spannmittels entspricht, und der Drehung in die entgegengesetzte Richtung entgegenwirkt.

Die in der WO 2006/046921 A1 offenbarte Zurrvorrichtung einschließlich dem auf der Dehnstange und/oder den Spannmittelteilen gleitenden Verbindungsteil hat den Vorteil, dass sowohl das Verzurren als auch das Kontern zeitsparend zu bewerkstelligen ist und nicht vergessen werden kann. Nachteilig ist jedoch, dass das zur Verzurrung erforderliche Verbindungsteil nur lose zwischen der Dehnstange und den Spannmittelteilen angeordnet ist. Dadurch besteht die Gefahr, dass das Verbindungsteil bei Vibrationen und dergleichen und/oder einer horizontalen Verzurrung, bei welcher ein niedriges oder kein Eigengewicht auf das Verbindungsteil wirkt, vom Endbereich der Dehnstange rutschen könnte. Um dieser Problematik Rechnung zu tragen, wird in der WO 2006/046921 A1 deshalb vorgeschlagen, das Verbindungsteil in derartigen Situationen über zusätzliche Sicherungsmittel zu halten.

Das der vorliegenden Erfindung zugrunde liegende Problem ist es daher, eine Vorrichtung der eingangs genannten Art anzugeben, die sich in jeder Situation unter Verwendung von möglichst wenigen Bauteilen, ohne zusätzliche Sicherungsmittel, schnell, einfach und sicher montieren lässt.

### Kurzfassung der Erfindung

Die Probleme werden bei einer Vorrichtung der eingangs genannten Art dadurch gelöst, dass das Kontermittel derart ausgestaltet ist, dass es eine gegenseitige Drehung der beiden Spannmittel in mindestens eine Drehrichtung ermöglicht, die dem Festziehen der Vorrichtung entspricht, und der Drehung in die entgegengesetzte Richtung entgegenwirkt, und das Kontermittel wenigstens ein Vorspannelement aufweist, das mittels einer Federkraft auf die Spindel wirkt.

Bei der erfindungsgemäßen Vorrichtung muss folglich weder langwierig eine Kontermutter auf die Spindel bzw. den Gewindeabschnitt der Spindel gegen die Spindelmutter geschraubt werden, noch muss ein Konterbolzen eines Kontermittels extra an den Gewindeabschnitt gedreht werden. Dadurch wird eine zuverlässige und einfach zu bedienende Zurrvorrichtung geschaffen, die ohne zusätzlichen Sicherungsvorgang von beispielsweise einem Stauer an Bord eines Schiffes wirksam ist und dabei nicht vergessen werden kann. Darüber hinaus ist die erfindungsgemäße Vorrichtung sowohl bei horizontaler, als auch bei vertikaler Verzurrung ohne Einschränkungen oder zusätzlich erforderliche Bauteile schnell und sicher einsetzbar.

Vorteilhafte Weiterbildungen der erfindungsgemäßen Vorrichtung zum Verzurren von Containern sind Gegenstand der abhängigen Ansprüche 2 bis 5.

So besteht bei einer bevorzugten Ausgestaltung der vorliegenden Erfindung das wenigstens eine Vorspannelement aus einer Feder und einem Kopfelement, wobei das Kopfelement im Wesentlichen kugelförmig, halbkugelförmig, zylinderförmig, keilförmig, oder sägezahnförmig ausgebildet ist. Somit sind verschiedene Vorspannelemente denkbar, die je nach Beschaffenheit der Spindel ein besonders vorteilhaftes Kontern derselben ermöglichen. Im Falle der Sägezahnform des Kopfelements ist eine dem Spindel-Gewindeabschnitt zugewandte Fläche aus Radialrichtung der Spindel betrachtet beispielsweise spitzer als die andere dem SpindelGewinde zugewandte Fläche. Genauer gesagt bildet die in Verzurrrichtung zeigende Fläche im keilförmigen Kopfelement einen spitzeren Winkel als die gegen die Verzurrrichtung zeigende Fläche des Kopfelements. Bei einer derartigen Ausgestaltung ist nicht nur ein besonders wirksames Kontern der Spindel möglich, sondern die Spindelmutter kann bei einem an der Spindel anliegendem Vorspannelement auch mit relativ geringem Reibungswiderstand auf die Spindel gedreht werden.

Des Weiteren enthält die Spindel gemäß der Erfindung wenigstens einen sich in Längsrichtung derselben erstreckenden gewindelosen Abschnitt, der den Gewindeabschnitt in Umfangsrichtung unterbricht. Dadurch wird das Kontern der Spindel besonders einfach. Bei einer bevorzugten Weiterbildung weist die Spindel zwei gewindelose Abschnitte auf, die in Umfangsrichtung der Spindel um 90° versetzt sind, und die Spindelmutter weist zwei Vorspannelemente auf, die in Umfangsrichtung der Spindelmutter um 180° versetzt sind. Bei einer derartigen Weiterbildung wird ein effektives Kontern der Spindel ermöglicht, da zwischen den zwei gewindelosen Abschnitten und den zwei Vorspannelementen vier um 90° versetzte Eingriffspositionen geschaffen werden. Der gewindelose Abschnitt kann hierbei eine Nut oder eine Abflachung sein.

Gemäß der vorliegenden Erfindung ist auch eine Ausgestaltung denkbar, bei welcher die Spindelmutter integraler Bestandteil des zweiten Spannmittels ist. In diesem Fall reduziert sich die Anzahl der erforderlichen Teile.

### Figurenbeschreibung

Bevorzugte Ausführungsbeispiele der erfindungsgemäßen Vorrichtung werden nachfolgend anhand der Zeichnungen näher erläutert. In den Zeichnungen zeigen:
Fig. 1 eine erste Ausführungsform einer Vorrichtung zum Verzurren von Containern mit den Erfindungsmerkmalen in Draufsicht;
Fig. 2 die Vorrichtung gemäß Fig. 1 im Querschnitt in den Ebenen II-II;
Fig. 3a, Fig. 3b, Fig. 3c und Fig. 3d Spindel-Gewindeabschnitte mit alternativen gewindelosen Abschnitten für Vorrichtungen mit den Erfindungsmerkmalen;
Fig. 4a, Fig. 4b, Fig. 4c, Fig. 4d, Fig. 4e und Fig. 4f alternative Vorspannelemente für Vorrichtungen mit den Erfindungsmerkmalen;
Fig. 5 eine weitere Ausführungsform einer Vorrichtung zum Verzurren von Containern mit den Erfindungsmerkmalen in Draufsicht; und
Fig. 6 die Vorrichtung gemäß Fig. 5 im Querschnitt in den Ebenen IV-IV.

### Beispielhafte Ausführungsformen

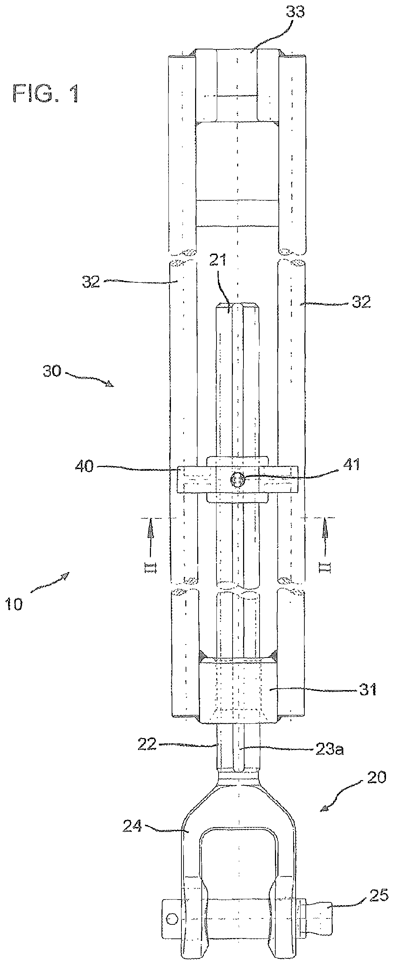

Fig. 1 zeigt eine Vorrichtung 10 zum Verzurren eines nicht dargestellten Containers, insbesondere an Deck eines Schiffes. Die Vorrichtung 10 weist ein erstes Spannmittel 20, ein zweites Spannmittel 30, eine Spindel 21 und eine Spindelmutter 40 auf. Das erste Spannmittel 20 ist im Wesentlichen gabelförmig ausgebildet ist. Das zweite Spannmittel 30 hat an einem Ende eine Spannmittelführung 31 und von dieser beabstandet ein Lager 33. Die Spannmittelführung 31 und das Lager 33 sind miteinander mittels zweier Streben 32 verbunden. Das erste Spannmittel 20 weist an dem vom Lager 33 abgewandten Ende der Spindel 21 einen Gabelkopf 24 mit einem Steckbolzen 25 auf und bildet somit an dessen einen Ende einen Schäkel. An Stelle des Steckbolzens 24 ist beispielsweise auch ein Schraubbolzen einsetzbar.

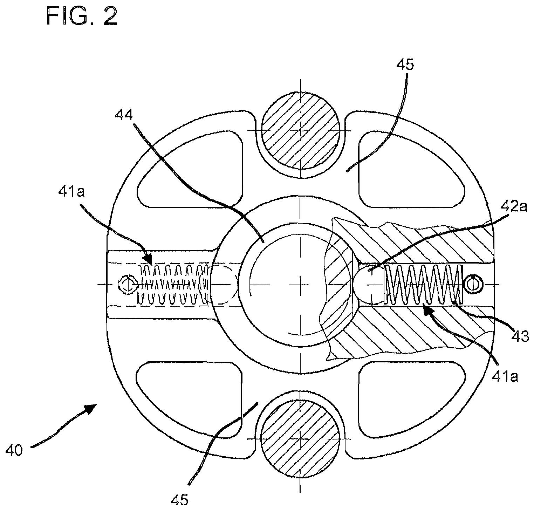

Fig. 2 zeigt eine Schnittansicht der Vorrichtung gemäß Fig. 1. Die Spindelmutter 40 weist jeweils eine Spindelmutterführung 45 auf, mit der sie gegen ein Verdrehen gegenüber dem ersten Spannmittel 20 und dem zweiten Spannmittel 30 um deren Längsachse gesichert und in deren Längsachse verschiebbar geführt ist. Die Spindelmutterführungen 45 wirken dabei mit den Streben 32 des zweiten Spannmittels 30 zusammen. Ferner hat die Spindelmutter 40 ein Innengewinde 44 (Spindelmutter-Gewindeabschnitt), das mit einem Außengewinde 22 der Spindel 21 (Spindel-Gewindeabschnitt) in Eingriff steht. Der Spindelmutter 40 ist darüber hinaus ein Kontermittel 41 zugeordnet, das eine gegenseitige Drehung der beiden Spannmittel 20, 30 in mindestens eine Drehrichtung ermöglicht, die dem Festziehen der Vorrichtung 10 entspricht, und der Drehung in die entgegengesetzte Richtung entgegenwirkt. Genauer gesagt weist das Kontermittel 41 gemäß der vorliegenden Ausführungsform zwei Vorspannelemente 41a auf, die mittels Kraft einer Feder 43 auf die Spindel 21 wirken. Gemäß der in Fig. 2 dargestellten Ausführungsform bestehen die beiden Vorspannelemente 41a jeweils aus der Feder 43 und einem zugehörigen Kopfelement 42a, wobei das Kopfelement 42a, im vorliegenden Fall kugelförmig ausgebildet ist.

Beim Verzurren eines Containers mit der in Fig. 1 und Fig. 2 gezeigten Vorrichtung wird zunächst eine nicht dargestellte Zurrstange oder ein Zurrseil an einem oberen Eckbeschlag eines nicht dargestellten Containers eingehängt. Das andere Ende der Zurrstange wird in das Lager 33 eingehängt. Der Gabelkopf 24 wird über ein nicht dargestelltes Zurrauge geführt und an diesem mit dem Steckbolzen 25 befestigt. Diese Ausgestaltung ist auch umgekehrt möglich. Die Spindelmutter 40 hat ein dem Außengewinde 22 der Spindel 21 entsprechendes Innengewinde 44. Die Spindelmutter 40 ist außerdem in Längsrichtung des zweiten Spannmittels 30 an diesem verschiebbar. Durch Verdrehen des zweiten Spannmittels 30 um seine Längsachse wird die Spindelmutter 40 auf der Spindel 21 des ersten Spannmittels 20 verschraubt, wobei die Spindelmutter 40 aufgrund der mit den Streben 32 zusammenwirkenden Spindelmutterführung 45 mitgenommen wird. Dadurch wird der Container verzurrt. Sobald die gewünschte Spannkraft der Vorrichtung zum Verzurren des Containers erreicht ist und beispielsweise der die Vorrichtung bedienende Stauer keine Kraft mehr auf die Vorrichtung 10 ausübt, wirken das Kontermittel 41 bzw. die zwei Vorspannelemente 41a mittels Kraft der Feder 43 derart auf die Spindel 21, dass sie einer gegenseitigen Drehung der beiden Spannmittel 20, 30 zumindest in eine Drehrichtung, die dem Lösen der Vorrichtung 10 entspricht, entgegenwirkt.

Eines der kugelförmigen Kopfelemente 42a der Vorspannelemente 41a greift hierbei zum Kontern der Spindel 21 bevorzugt in einen sich in Längsrichtung derselben erstreckenden gewindelosen Abschnitt 23a, der den Spindel-Gewindeabschnitt 22 in Umfangsrichtung unterbricht und, wie in Fig. 2 dargestellt, nutförmig ausgebildet ist. Der gewindelose Abschnitt der Spindel 21 und das eine Kopfelement 42a des einen Vorspannelements 41a stehen dabei bevorzugt wenigstens teilweise formschlüssig in Eingriff. Das andere Kopfelement 42a des anderen Vorspannelements 41a liegt dabei wenigstens kraftschlüssig am Spindelgewindeabschnitt 22 an. Durch eine derartige Ausgestaltung kann die Spindel 21 besonders einfach und effektiv gekontert werden.

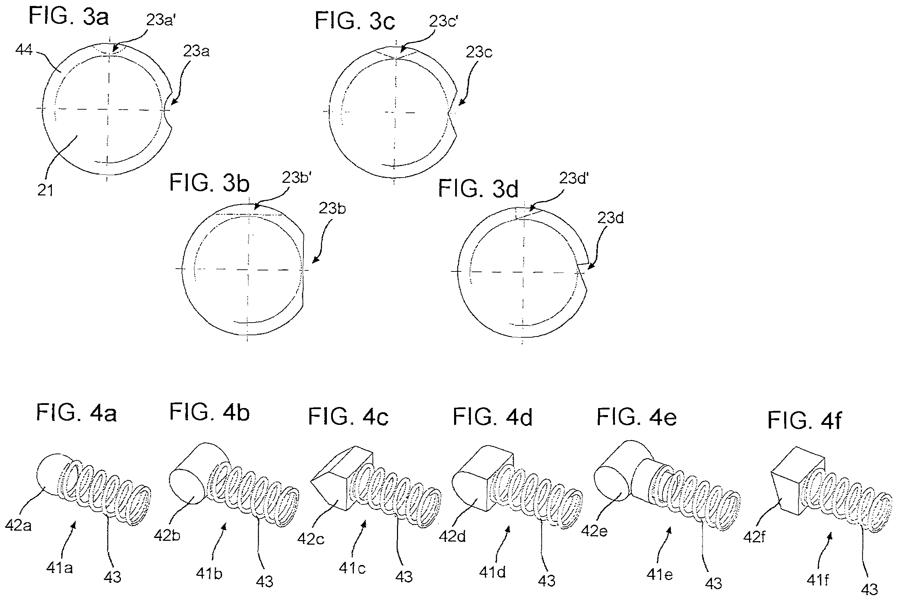

Obwohl der gewindelose Abschnitt in Fig. 2 kreissegmentförmig dargestellt ist, ist er nicht darauf beschränkt. Alternativ kann der gewindelose Abschnitt unterschiedliche Nutformen aufweisen. Zum Beispiel kann der gewindelose Abschnitt, wie in den Figuren 3a bis 3d dargestellt, auch als gerader bzw. abgeflachter gewindeloser Abschnitt 23b, 23b', als V-förmige Nut 23c, 23c', oder als sägezahnförmige Nut 23d, 23d' ausgebildet sein. An Stelle der kreissegmentförmigen Nut ist beispielsweise auch eine nicht dargestellte elliptische Nut denkbar. In den Figuren 3a bis 3d sind jeweils zwei gewindelose Abschnitte dargestellt, wobei jeweils ein gewindeloser Abschnitt, der strich-doppelpunktiert dargestellt und mit ' gekennzeichnet ist, optional ist. Die Größe des gewindelosen Abschnitts auf der Spindel kann je nach Bedarf variieren. Das Verhältnis zwischen Spindel-Gewindeabschnitt 22 und gewindelosem Abschnitt kann je nach Zug- bzw. Druckbeanspruchung der Vorrichtung 10 ausgelegt werden.

Ferner muss das Kopfelement 42a, obwohl es in Fig. 2 kugelförmig dargestellt ist, nicht zwingend rotationssymmetrisch ausgebildet sein. Wie in den Figuren 4a bis 4f perspektivisch dargestellt, kann das Kopfelement 42 auch zylinderförmig, keilförmig, kreissegmentförmig oder sägezahnförmig ausgestaltet sein. Alternativ zu dem kugelförmigen Kopfelement 42 ist auch ein nicht dargestelltes eierförmiges Kopfelement denkbar. Bevorzugt ist es in jedem Fall, dass das Kopfelement 42 eine zur Nut bzw. zur Abflachung 23 korrespondierende Form aufweist. Bei der Auswahl des Kopfelements für die Vorrichtung 10 ist darauf zu achten, dass es mit dem zugehörigen gewindelosen Abschnitt geeignet in Kraft- und/oder Formschluss gebracht werden kann. Grundsätzlich sind die Kombination aus wenigstens einem gewindelosen Abschnitt 23 und wenigstens einem Kopfabschnitt 42 jedoch frei wählbar.

Um beim Lösen der Vorrichtung 10 einen möglichst geringen Widerstand durch die Vorspannelemente zu haben, ist es in einem nicht dargestellten beispielhaften Ausführungsbeispiel denkbar, dass die Feder 43 und/oder das Kopfelement 42 an einem Rückstellmittel, beispielsweise einer Schnur, einem Stift, oder dergleichen befestigt sind. Beim Lösen der Vorrichtung 10 kann das Vorspannelement dann beispielsweise von dem Stauer in eine Position gebracht und in dieser gegebenenfalls arretiert werden, in welcher das Kopfelement 42 nicht an der Spindel 21 anliegt.

Obwohl die Spindel 21 in den Figuren stets mit wenigstens einem gewindelosen Abschnitt dargestellt ist, kann die Spindel 21 auch ohne gewindelosem Abschnitt ausgebildet sein. Bei einer besonders bevorzugten Ausführungsform weist die Spindel 21, wie beispielsweise in Figur 3a dargestellt, zwei gewindelose Abschnitte 23a, 23a' auf, die in Umfangsrichtung der Spindel 21 um 90° versetzt sind, und die Spindelmutter 40 weist, wie beispielsweise in Fig. 2 dargestellt, zwei Vorspannelemente 41a auf, die in Umfangsrichtung der Spindelmutter 40 um 180° versetzt sind. Bei einer derartigen Weiterbildung wird ein effektives Kontern der Spindel 21 ermöglicht, da zwischen den zwei gewindelosen Abschnitten 23a, 23a' und den zwei Vorspannelementen 41a vier um 90° versetzte Eingriffspositionen geschaffen werden. Alternativ ist auch eine Ausgestaltung möglich, bei welcher die gewindelosen Abschnitte 23a, 23a' um 180° und die Vorspannelemente 41a um 90° versetzt sind. Allgemein ist die Anzahl dieser Eingriffspositionen durch zusätzliche Vorspannelemente und/oder gewindelose Abschnitte je nach Auslegung der Vorrichtung 10 beliebig erweiterbar.

Ferner ist zu erwähnen, dass, obwohl das Kopfelement in den Figuren ausschließlich durch eine Schraubendruckfeder vorgespannt ist, das Kopfelement beispielsweise auch durch eine Torsionsfeder, eine Biegefeder, eine Luftfeder, eine Elastomerfeder, eine Evolutfeder oder ein anderes im Stand der Technik bekanntes federndes Vorspannelement vorgespannt sein kann. Dabei ist nicht notwendiger Weise ein separates Kopfelement erforderlich. In einem alternativen Ausführungsbeispiel kann die Feder 43 auch selbst das geeignete Kopfelement bilden.

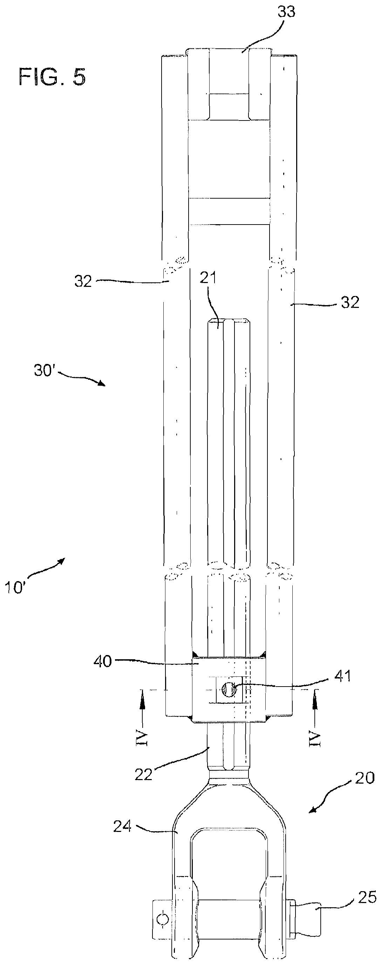

Fig. 5 zeigt eine Vorrichtung 10' als eine zweite Ausführungsform der vorliegenden Erfindung. Die Vorrichtung 10' weist ein gabelförmiges erstes Spannmittel 20 auf, welches im Wesentlichen gleich dem Spannmittel der ersten Ausführungsform ist. Die Vorrichtung 10' weist ferner ein zweites Spannmittel 30' auf, das ähnlich dem der ersten Ausführungsform ist, jedoch eine an seinem dem Gabelkopf 24 des ersten Spannmittels 20 zugewandten Ende eine Spindelmutter 40' integriert hat. Die Spindelmutter 40' ist fest mit den Streben 32 verbunden. Bei dem gezeigten Ausführungsbeispiel ist die Spindelmutter 40' mit den Streben 32 verschweißt. Dadurch kann die Anzahl der für die Vorrichtung 10' benötigten Bauteile reduziert werden. Die im zweiten Spannmittel 30' integrierte Spindelmutter 40' gemäß der zweiten Ausführungsform ist dabei im Wesentlichen gleich der separat vorgesehenen Spindelmutter 40 gemäß der ersten Ausführungsform.

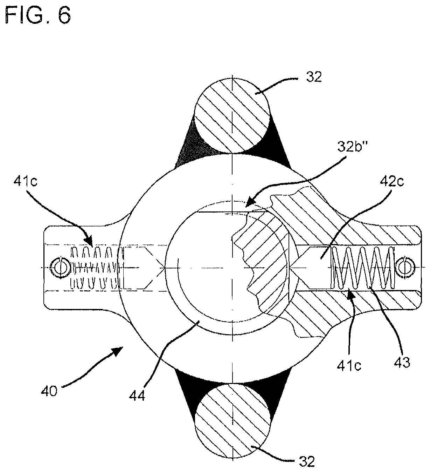

Fig. 6 zeigt eine Schnittansicht der Vorrichtung 10' von Fig. 5, bei welcher auf der Spindel 21 beispielsweise ein gerader gewindeloser Abschnitt 23b" vorgesehen ist, auf welchen über die Feder 43 ein keilförmiges Kopfelement 42c drückt.

### Bezugszeichenliste

- 10, 10': Vorrichtung
- 20: Erstes Spannmittel
- 21: Spindel
- 22: Spindel-Gewindeabschnitt
- 23: Gewindeloser Abschnitt (23a, 23a', 23b, 23b', 23b", 23c, 23c', 23d, 23d')
- 24: Gabelkopf
- 25: Steckbolzen
- 30, 30': Zweites Spannmittel
- 31: Spannmittelführung
- 32: Streben
- 33: Lager
- 40, 40': Spindelmutter
- 41: Kontermittel (Vorspannelement 41a, 41b, 41c, 41d, 41e)
- 42: Kopfelement (42a, 42b, 42c, 42d, 42e, 42f)
- 43: Feder
- 44: Spindelmutter-Gewindeabschnitt
- 45: Spindelmutterführung

## Patentansprüche

1. Vorrichtung (10; 10') zum Verzurren von Containern, die zwischen zwei Fixierpunkten, die aneinander gesichert werden sollen, zu befestigen ist, mit:
einem ersten Spannmittel (20), das mit einem der Fixierpunkte verbindbar ist und eine Spindel (21) enthält, die in Längsrichtung des ersten Spannmittels (20) verläuft und einen Spindel-Gewindeabschnitt (22) aufweist;
einem zweiten Spannmittel (30; 30'), das mit dem anderen der Fixierpunkte verbindbar ist;
einer Spindelmutter (40; 40'), die einen Spindelmutter-Gewindeabschnitt (44) aufweist, der mit dem Spindel-Gewindeabschnitt (22) des ersten Spannmittels (20) in Eingriff steht, und die zwischen dem ersten und dem zweiten Spannmittel (20, 30; 20, 30') angeordnet ist;
einem der Spindelmutter (40; 40') zugeordneten Kontermittel (41), welches eine gegenseitige Drehung der beiden Spannmittel (20, 30; 20, 30') in mindestens eine Drehrichtung ermöglicht, die dem Festziehen der Vorrichtung (10; 10') entspricht, und der Drehung in die entgegengesetzte Richtung entgegenwirkt, und das wenigstens ein Vorspannelement (41a; 41b; 41c; 41d; 41e) aufweist, das mittels einer Federkraft auf die Spindel (21) wirkt;
**dadurch gekennzeichnet, dass**
die Spindel (21) wenigstens einen sich in Längsrichtung derselben erstreckenden gewindelosen Abschnitt (23a, 23a'; 23b, 23b'; 23b, 23b"; 23c, 23c'; 23d, 23d') enthält, der den Spindel-Gewindeabschnitt (22) in Umfangsrichtung unterbricht.

2. Vorrichtung (10; 10') nach Anspruch 1, **dadurch gekennzeichnet, dass** das wenigstens eine Vorspannelement aus einer Feder (43) und einem Kopfelement (42a; 42b; 42c; 42d; 42e; 42f) besteht und das Kopfelement kugelförmig, halbkugelförmig, zylinderförmig, keilförmig, oder sägezahnförmig ausgebildet ist.

3. Vorrichtung (10; 10') nach Anspruch 1 oder 2, **dadurch gekennzeichnet, dass** die Spindel (21) zwei gewindelose Abschnitte (23a, 23a'; 23b, 23b'; 23b, 23b"; 23c, 23c'; 23d, 23d') aufweist, die in Umfangsrichtung der Spindel um 90° versetzt sind, und die Spindelmutter (40) zwei Vorspannelemente (41a; 41b; 41c; 41d; 41e) aufweist, die in Umfangsrichtung der Spindelmutter (40; 40') um 180° versetzt sind.

4. Vorrichtung (10; 10') nach einem der Ansprüche 1 bis 3, **dadurch gekennzeichnet, dass** der gewindelose Abschnitt eine Nut oder eine Abflachung ist.

5. Vorrichtung (10; 10') nach einem der Ansprüche 1 bis 4, **dadurch gekennzeichnet, dass** die Spindelmutter (40') integraler Bestandteil des zweiten Spannmittels (30) ist.

## Claims

1. A device (10; 10') for the lashing of containers, which is to be attached between two fastening points, which are to be secured to one another, having the following:
a first clamping device (20), which can be connected to one of the fastening points and contains a spindle (21), which extends in the longitudinal direction of the first clamping device (20) and has a spindle/threaded section (22);
a second clamping device (30; 30'), which can be connected to the other of the fastening points;
a spindle nut (40; 40'), which has a spindle nut/threaded section (44), which engages with the spindle/threaded section (22) of the first clamping device (20), and which is arranged between the first and the second clamping device (20, 30; 20, 30');
a locking means (41) allocated to the spindle nut (40; 40'), which enables reciprocal rotation of the two clamping devices (20, 30; 20, 30') in at least one direction of rotation corresponding to the tightening of the device (10; 10'), and which counters the rotation in the opposite direction, and which has at least one pre-tensioning element (41a; 41b; 41c; 41d; 41e), which acts upon the spindle (21) by means of a spring force;
**characterized in that**
the spindle (21) contains at least one non-threaded section (23a, 23a'; 23b, 23b'; 23b, 23b"; 23c, 23c'; 23d, 23d') extending in the longitudinal direction of same, which interrupts the spindle/threaded section (22) in the circumferential direction.

2. The device (10; 10') according to claim 1, **characterized in that** the at least one pre-tensioning element consists of a spring (43) and a head element (42a; 42b; 42c; 42d; 42e; 42f), and the head element is formed in the shape of a sphere, hemisphere, cylinder, wedge, or sawtooth.

3. The device (10; 10') according to either claim 1 or 2, **characterized in that** the spindle (21) has two non-threaded sections (23a, 23a'; 23b, 23b'; 23b, 23b"; 23c, 23c'; 23d, 23d'), which are offset by 90° in the circumferential direction of the spindle, and the spindle nut (40) has two pre-tensioning elements (41a; 41b; 41c; 41d; 41e), which are offset by 180° in the circumferential direction of the spindle nut (40; 40').

4. The device (10; 10') according to any of claims 1 to 3, **characterized in that** the non-threaded section is a groove or flattening.

5. The device (10; 10') according to any of claims 1 to 4, **characterized in that** the spindle nut (40') is an integral component of the second clamping device (30).

## Revendications

1. Dispositif (10 ; 10') servant à arrimer des conteneurs, qui doit être attaché entre deux points de fixation, qui sont censés être sécurisés l'un au niveau de l'autre, avec :
un premier moyen de serrage (20), qui peut être relié à un des points de fixation et contient une broche (21), qui s'étend dans le sens longitudinal du premier moyen de serrage (20) et présente une section filetée de broche (22) ;
un deuxième moyen de serrage (30 ; 30'), qui peut être relié à l'autre des points de fixation ;
un écrou de broche (40 ; 40'), qui présente une section filetée d'écrou de broche (44), qui est en prise avec la section filetée de broche (22) du premier moyen de serrage (20), et qui est disposé entre le premier et le deuxième moyen de serrage (20, 30 ; 20, 30') ;
un contre-moyen (41) associé à l'écrou de broche (40 ; 40'), lequel permet une rotation réciproque des deux moyens de serrage (20, 30 ; 20, 30') dans au moins un sens de rotation, qui correspond au serrage du dispositif (10 ; 10'), et contrecarre la rotation dans le sens opposé, et présente l'au moins un élément de précontrainte (41a ; 41b ; 41c ; 41d ; 41e), qui agit sur la broche (21) au moyen d'une force de ressort,
**caractérisé en ce que**
la broche (21) contient au moins une section sans filetage (23a, 23a' ; 23b, 23b' ; 23b, 23b'' ; 23c, 23c' ; 23d, 23d') s'étendant dans le sens longitudinal de celle-ci, qui interrompt la section filetée de broche (22) dans le sens périphérique.

2. Dispositif (10 ; 10') selon la revendication 1, **caractérisé en ce que** l'au moins un élément de précontrainte est constitué d'un ressort (43) et d'un élément de tête (42a ; 42b ; 42c ; 42d ; 42e ; 42f) et l'élément de tête est réalisé sous forme de sphère, sous forme de demi-sphère, sous forme de cylindre, sous forme de coin ou sous forme de dent de scie.

3. Dispositif (10 ; 10') selon la revendication 1 ou 2, **caractérisé en ce que** la broche (21) présente deux sections sans filetage (23a, 23a' ; 23b, 23b' ; 23b, 23b'' ; 23c, 23c' ; 23d, 23d'), qui sont décalées de 90° dans le sens périphérique de la broche, et l'écrou de broche (40) présente deux éléments de précontrainte (41a ; 41b ; 41c ; 41d ; 41e), qui sont décalés de 180° dans le sens périphérique de l'écrou de broche (40 ; 40').

4. Dispositif (10 ; 10') selon l'une quelconque des revendications 1 à 3, **caractérisé en ce que** la section sans filetage est une rainure ou une zone aplatie.

5. Dispositif (10 ; 10') selon l'une quelconque des revendications 1 à 4, **caractérisé en ce que** l'écrou de broche (40') fait partie intégrante du deuxième moyen de serrage (30).
